(19) **Europäisches Patentamt**
**European Patent Office**
**Office européen des brevets**

(11) **EP 2 216 307 A1**

(12) **EUROPEAN PATENT APPLICATION**
published in accordance with Art. 153(4) EPC

(43) Date of publication:
**11.08.2010 Bulletin 2010/32**

(21) Application number: **08855678.2**

(22) Date of filing: **27.11.2008**

(51) Int Cl.:
*C04B 35/00* (2006.01)   *H01B 3/12* (2006.01)
*H01G 4/12* (2006.01)

(86) International application number:
**PCT/JP2008/071568**

(87) International publication number:
**WO 2009/069707 (04.06.2009 Gazette 2009/23)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **29.11.2007 JP 2007308273**
**30.09.2008 JP 2008252008**

(71) Applicant: **Kyocera Corporation**
**Kyoto-shi**
**Kyoto 612-8501 (JP)**

(72) Inventors:
• **TOYODA, Satoshi**
**Kirishima-shi**
**Kagoshima 899-4396 (JP)**
• **MURAKAWA, Shunichi**
**Kirishima-shi**
**Kagoshima 899-4396 (JP)**

(74) Representative: **HOFFMANN EITLE**
**Patent- und Rechtsanwälte**
**Arabellastrasse 4**
**81925 München (DE)**

(54) **DIELECTRIC CERAMICS, PROCESS FOR PRODUCTION THEREOF, AND RESONATOR**

(57) Provided is a dielectric ceramics having crystals of a composition formula: $aBaO \cdot bCoO \cdot cZnO \cdot dNb_2O_5$ wherein coefficients a, b, c and d satisfy $0.498 \leq a \leq 0.500$, $0.066 \leq b \leq 0.132$, $0.033 \leq c \leq 0.099$, and $0.335 \leq d \leq 0.338$. Provided is a dielectric ceramics having crystals composed of BaO, CoO, ZnO, and $Nb_2O_5$, wherein a peak strength ratio $I_A/I_B$ between a crystal peak $I_A$ existing in the vicinity of $2\theta=18°$ and a crystal peak $I_B$ existing in the vicinity of $2\theta=31°$ in an X-ray diffraction chart is 0.003 or more. Provided is a resonator using the dielectric ceramics as a dielectric body.

EP 2 216 307 A1

**Description**

TECHNICAL FIELD

The present invention relates to a dielectric ceramics having a high specific inductive capacity $\varepsilon r$ (the ratio to a dielectric constant $\varepsilon_0$ of vacuum) and a high Q value in a high frequency region including micro waves, millimeter waves or the like, and a method of manufacturing the dielectric ceramics, and a resonator (particularly a dielectric resonator used for mobile phone base station filters of frequency bands of 800 MHz or higher).

BACKGROUND ART

Following upon the recent rapid expansion of mobile communication markets such as mobile phones, the characteristics required for components and materials thereof become increasingly severer. In general, the dielectric materials used for capacitors and the like are required to satisfy the conditions such as a small dielectric loss and a satisfactory temperature coefficient, besides a high dielectric constant. In recent years, the dielectric characteristics particularly in a high frequency region (800 MHz to 2 GHz) have been required.

For example, as a dielectric ceramics whose specific inductive capacity is about 35, Japanese Unexamined Patent Application Publication No. 8-45347 describes a dielectric ceramics having $Ba(CO_{1/3}Nb_{2/3})O_3Ba(Zn_{1/3}Nb_{2/3})O_3$ based crystals and having high dielectric characteristics.

However, the dielectric ceramics may cause variations in Q value, specific inductive capacity ($\varepsilon r$) and temperature coefficient ($\tau f$) due to the influence of pores remaining in a sintered body, or the like. Especially when manufacturing large products, it can be considered that due to the pores remaining in the sintered body, strength is lowered and the variations of dielectric characteristics becomes large within the sintered body.

Since the dielectric ceramics is sintered in a short period of time, it can be considered that the crystals of the obtained sintered body is not subject to grain growth and the crystal grain diameter thereof is small, resulting in the sintered body having many crystal grain boundaries. It can be considered that in the sintered body having a small crystal grain diameter and many crystal grain boundaries, energy loss occurs and dielectric tangent ($\tan\delta$) becomes large and Q value expressed by the reciprocal number thereof is lowered due to the influence of the grain boundaries, or the influences of sintering additives and impurities existing in the grain boundaries.

The dielectric ceramics contains a large amount of Ba ingredient, and it can be considered that the excess Ba ingredient remains in the sintered body as a different phase and lowers dielectric characteristics.

In the dielectric ceramics, Zn ingredient having a low melting point is likely to evaporate during sintering, whereby it can be considered that the composition ratio of the Ba ingredient is further increased and a large number of different phases containing the Ba ingredient are generated in the sintered body, and these different phases hinders the inherent dielectric characteristics.

Additionally, in a case that the dielectric ceramics is used for manufacturing a large sintered body, the Zn ingredient is likely to evaporate from the surface vicinity thereof. It can therefore be considered that a difference occurs in the composition ratio between the surface vicinity and the interior, and a difference of dielectric characteristics occurs within the sintered body, thus failing to satisfy the required dielectric characteristics of the sintered body as a whole.

DISCLOSURE OF THE INVENTION

An object of the present invention is to provide a dielectric ceramics having excellent dielectric characteristics, a method of manufacturing the dielectric ceramics, and a resonator by solving the above problems.

The dielectric ceramics according to a first embodiment of the present invention has crystals in which coefficients a, b, c and d in a composition formula: $aBaO \cdot bCoO \cdot cZnO \cdot dNb_2O_5$ satisfy the following equations.

$$0.498 \leq a < 0.500;$$

$$0.066 \leq b \leq 0.132;$$

$$0.033 \leq c \leq 0.099;$$

and

$$0.335 \leq d \leq 0.338$$

The dielectric ceramics according to a second embodiment of the present invention has crystals composed of BaO, CoO, ZnO, and $Nb_2O_5$ and a peak strength ratio $I_A/I_B$ between a crystal peak $I_A$ existing in the vicinity of $2\theta=18°$ and a crystal peak $I_B$ existing in the vicinity of $2\theta=31°$ in an X-ray diffraction chart is 0.003 or more.

The method of manufacturing a dielectric ceramics according to a third embodiment of the present invention includes wet-mixing a powder body in which coefficients a, b, c and d in a composition formula: $aBaO \cdot bCoO \cdot cZnO \cdot dNb_2O_5$ satisfy the above equations; and sintering by holding this in atmosphere at 1400°C to 1600°C for more than 5 hours and equal to and less than 15 hours.

The resonator according to a fourth embodiment of the present invention uses the dielectric ceramics as a dielectric body.

In the dielectric ceramics, the method of manufacturing the same, and the resonator according to the first, third and fourth embodiments of the present invention, the ratio of Ba ingredient in the sintered body is lowered than conventional ones by setting the ratio of Ba ingredient to less than 50%, whereby the remaining Ba ingredient is less likely to deteriorate dielectric characteristics due to formation of a different phase in the sintered body. Additionally, atoms are arranged more regularly, thus making it possible to obtain high dielectric characteristics.

In the dielectric ceramics according to the second embodiment of the present invention, owing to a specific peak strength ratio in X-ray diffraction, atoms are arranged more regularly, thus making it possible to obtain high dielectric characteristics. It is also possible to improve mechanical characteristics such as fracture toughness and strength than conventional ones.

BRIEF DESCRIPTION OF THE DRAWINGS

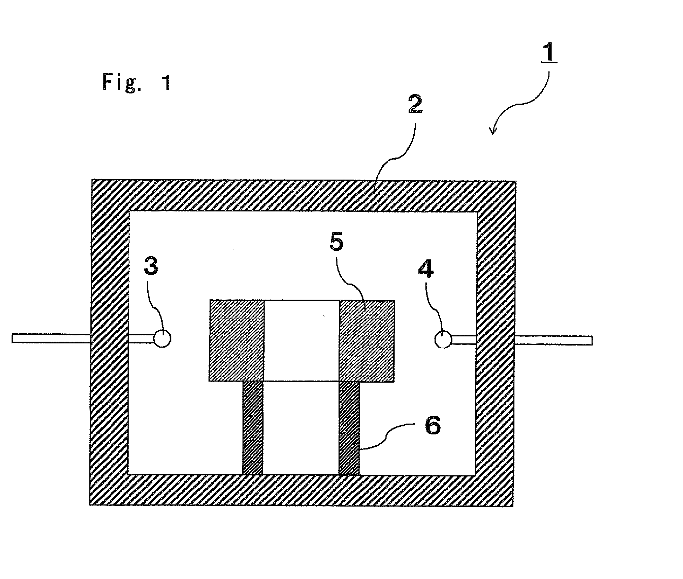

Fig. 1 is a sectional view schematically showing a resonator according to an embodiment of the present invention.

Description of Reference Numerals

    1: dielectric resonator
    2: metal case
    3: input terminal
    4: output terminal
    5: dielectric ceramic
    6: support stand

PREFERRED EMBODIMENTS FOR CARRYING OUT THE INVENTION

An embodiment in accordance with the dielectric ceramics of the present invention is described below. In the present embodiment, the dielectric ceramics means a polycrystalline sintered body obtained by forming and sintering an unsintered body. In order to obtain a high Q value, a high specific inductive capacity ($\varepsilon r$) and a stable temperature coefficient ($\tau f$), the dielectric ceramics has crystals of the following composition formula: $aBaQ \cdot bCoO \cdot cZnO \cdot dNb_2O_5$, where the coefficients a, b, c and d are within the following ranges: $0.498<a<0.500$, $0.066 \leq b \leq 0.132$, $0.033 \leq c \leq 0.099$, and $0.335 \leq d \leq 0.338$. These coefficients a, b, c and d satisfy the following equality: $a+b+c+d=1$

The reason why these coefficients a, b, c and d of their respective ingredients are limited to the above ranges is as follows. In a case that the value of "a" falls within the range $0.498 \leq a \leq 0.500$, even if during sintering, Ba ingredient combines with Co, Zn, and Nb as other ingredients to form $Ba(CO_{1/3}Nb_{2/3})O_3$ and $Ba(Zn_{1/3}Nb_{2/3})O_3$ each having perovskite structure, the excess Ba ingredient can be less likely to remain in the sintered body. Therefore, a deterioration of a dielectric characteristics due to forming a compound by combining the excess Ba ingredient combines with other element contained as an unavoidable ingredient or the like can be reduced. If the excess Ba ingredient forms a different phase, due to its large ionic radius, it greatly influences dielectric characteristics than other elements.

Further, if the value of "a" falls within the above range, shortage of the Ba ingredient for forming $Ba(Co_{1/3}Nb_{2/3})O_3$ and $Ba(Zn_{1/3}Nb_{2/3})O_3$ each showing high dielectric characteristics can be reduced. A deterioration of dielectric characteristics due to forming a compound by combining Co, Zn and Nb ingredients with other elements contained as unavoidable impurities or the like, and making the compound a different phase in the sintered body can also be reduced.

The reason why the value of "b" is within the range $0.066 \leq b \leq 0.132$ is that this range provides a large specific inductive capacity ($\varepsilon r$), a high Q value and a small absolute value of temperature coefficient ($\tau f$) of resonance frequency. Particularly, the lower limit of "b" is preferably 0.068, and the upper limit thereof is preferably 0.130.

The reason why the value of "c" is within the range $0.033 \leq c \leq 0.099$ is that this range provides a large specific inductive capacity ($\varepsilon r$), a high Q value and a small absolute value of temperature coefficient ($\tau f$) of resonance frequency. Particularly, the lower limit of "c" is preferably 0.035, and the upper limit thereof is preferably 0.095.

The reason why the value of "d" is within the range $0.335 \leq d \leq 0.338$ is that this range provides a large specific inductive capacity ($\varepsilon r$), a high Q value and a small absolute value of temperature coefficient ($\tau f$) of resonance frequency.

The dielectric ceramics of the present embodiment has crystals composed of BaO, CoO, ZnO and $Nb_2O_5$. A peak strength ratio $I_B/I_A$ between a crystal peak $I_A$ existing in the vicinity of $2\theta=18°$ (17.7°) (the range from 17° to 19°) and a crystal peak $I_B$ existing in the vicinity of $2\theta=31°$ (30.9°) (the range from 30° to 32°) in an X-ray diffraction chart, is 0.003 or more.

When the peak strength ratio $I_A/I_B$ is 0.003 or more, in the dielectric ceramics of the present invention having the perovskite-type crystal structure, namely, the structure generally expressed by the composition formula: $ABO_3$, particularly the atomic arrangement in B-site becomes more regular (regularized). This achieves the dielectric characteristics inherent in the dielectric ceramics containing $Ba(Co_{1/3}Nb_{2/3})O_3$-$Ba(Zn_{1/3}Nb_{2/3})O_3$ based crystals, making it possible to improve the values of quality coefficient Q value, specific inductive capacity ($\varepsilon r$) and temperature coefficient ($\tau f$). The upper limit value of the peak strength ratio $I_A/T_B$ is approximately 0.01.

The peak strength ratio $I_A/I_B$ is a value calculated as follows. That is, firstly, a diffraction pattern of an optional portion on the surface of the dielectric ceramics is measured by an X-ray diffraction apparatus. Next, the obtained diffraction pattern is outputted as a chart. The ordinate of the X-ray diffraction chart represents peak strength and the abscissa thereof represents diffraction angle ($2\theta$). A peak strength is read by using a peak in the vicinity of $2\theta=18°$ as a crystal peak $I_A$, and a peak in the vicinity of $2\theta=31°$ as a crystal peak $I_B$. A peak strength ratio is calculated by applying these read crystal peaks $I_A$ and $I_B$ to the following equation: $I_A/I_B$.

Using a "D8DISCOVER with GADDS Super Speed" manufactured by BrukerAXS Inc. as the X-ray diffraction apparatus, the diffraction pattern of a measuring sample is obtained by measuring the sample under the following conditions: X-ray source: $CuK\alpha$; output: 45 kV, 110 mA; distance between detectors: 15 cm; collimator diameter: 0.8 $mm\phi$; $2\theta=10°$ to 80°; and measuring time: 8 sec/frame.

In the dielectric ceramics of the present embodiment, the mean grain diameter of the crystals of the composition formula is preferably 10 $\mu m$ or more and 30 $\mu m$ or less. If the mean grain diameter of the crystals is 10 $\mu m$ or more and 30 $\mu m$ or less, the grain diameter is larger than conventional ones, making it possible to decrease the number of crystal grain boundaries. This lowers the dielectric characteristics, particularly the value of dielectric tangent ($\tan\delta$), making it possible to improve the Q value as the reciprocal number thereof. Additionally, mechanical characteristics such as fracture toughness and strength can be improved than conventional ones. The mean particle diameter can be measured by Hall method or the like as described later.

In the dielectric ceramics of the present embodiment, the ratio of the element count numbers of Zn and Ba (Zn/Ba) in the ceramic is preferably 1.6 or more and 1.7 or less both in the surface vicinity and the interior.

That is, in the dielectric ceramics containing the $Ba(Co_{1/3}Nb_{2/3})O_3$-$Ba(Zn_{1/3}Nb_{2/3})O_3$ based crystals, the Zn ingredient in the composition has a low melting point. Therefore, during sintering, the Zn ingredient is likely to evaporate by combining with other ingredient to form a compound having a low melting point along with oxygen. The evaporation decreases the amount of production of $Ba(Zn_{1/3}Nb_{2/3})O_3$ in the structure. The evaporation of Zn element is likely to occur particularly in the surface vicinity which is frequently exposed to a furnace atmosphere during sintering. It can be considered that a decrease in the amount of production of $Ba(Zn_{1/3}Nb_{2/3})O_3$ in the surface vicinity causes not only variations in the dielectric characteristics (Q value, $\varepsilon r$, and $\tau f$) within the identical sintered body, but also significant deterioration of the dielectric characteristics of the sintered body as a whole.

For example, a more excellent dielectric ceramics is achieved by measuring the count number of element of Zn ingredient that is susceptible to evaporation, and by adjusting the ratio of the obtained counter number and the count number of Ba element to the range of 1.6 to 1.7 in the surface vicinity and the interior. That is, by adjusting the content ratio of Zn to Ba (Zn atomic percentage/Ba atomic percentage) to the range of 1.6 to 1.7 in the surface and interior, the dielectric ceramics having a small difference of the amount of generation of $Ba(Zn_{1/3}Nb_{2/3})O_3$ between the surface vicinity and the interior can be obtained, thereby achieving high dielectric characteristics.

The dielectric ceramics of the present embodiment can be obtained by using a manufacturing method for reducing evaporation as much as possible during the step of sintering Zn ingredient described later, and by adjusting so that the dielectric ceramics composition has a smaller amount of Ba ingredient than conventional one.

The content ratio of Zn and Ba in the dielectric ceramics (Zn atomic percentage/Ba atomic percentage) is obtained as follows. The sintered body is pulverized into powder, and the powder is formed by a sample forming method such as glass bead method. Thereafter, measurements are carried out using a fluorescent X-ray analyzing apparatus ("ZSX100e (Rh-X-ray tube)" manufactured by Rigaku Denki Kogyo Co., Ltd.) by setting a diameter measured to 10 to 50 mm. Alternatively, a certain visual field of a sample is observed by a transmission electron microscope (TEM), and the counter numbers of elements such as Zn, Co and Ba in the visual field are measured by an energy dispersive X-ray diffraction apparatus. In the measurements using the energy dispersive X-ray diffraction apparatus, a measuring spot is confirmed at a high magnification by the transmission electron microscope. Then, setting an electron beam irradiation spot diameter to $\Phi 0.5$ to 5 nm, the measurement is carried out under the following conditions: 30 to 75 seconds in measuring time; and 0.1 to 50 keV in measuring energy width.

The surface vicinity corresponds to a region extending from the surface of the sintered body down to 2 mm, and the interior corresponds to a region deeper than that. Particularly, with respect to the interior, it is preferable to measure a mid-portion of the cross section of the sintered body.

Preferably, the dielectric ceramics of the present preferred embodiment is composed mainly of the above dielectric ceramics and contains a totaling 0.3% by mass or less (except for 0% by mass) of at least one of yttrium and zirconium in terms of oxide. Both of yttrium and zirconium have a high melting point and are less likely to combine with other ingredient to form a compound. It is therefore easy for yttrium and zirconium to exist as a compound as oxide at grain boundaries in the dielectric ceramics containing $Ba(Co_{1/3}Nb_{2/3})O3$-$Ba(Zn_{1/3}Nb_{2/3})O_3$ based crystals. When the dielectric ceramics is subjected to stress, if the stress exceeds the strength thereof, crack advances along the grain boundaries, and grain boundary fracture occurs after a while. By allowing a small amount of a compound of yttrium or zirconium to exist at the grain boundaries, it is capable of obtaining suppressive effect that the crystal particles of the compound of yttrium or zirconium stop the crack advance.

Consequently, the inclusion of a specific amount of yttrium or zirconium can improve mechanical characteristics such as fracture toughness and strength better than conventional ones. Owing to high mechanical characteristics such as fracture toughness and strength, for example, if the dielectric ceramics of the present embodiment is used as a dielectric resonator for a mobile phone base station, the dielectric resonator is less susceptible to fracture and breakage during handling on assembling it to an apparatus or its installation. It is also less susceptible to fracture and breakage due to vibration or shock exerted on the dielectric ceramics.

It is more preferable to contain a totaling 0.15% by mass or less of at least one of yttrium and zirconium in terms of oxide.

The amounts of yttrium and zirconium in the dielectric ceramics can be measured by dissolving their powder samples in a solution such as hydrochloric acid, followed by quantitative analysis of yttrium content and zirconium content in the solution by using an ICP (inductively coupled plasma) emission spectrochemical analyzer ("ICPS-8100" manufactured by Shimadzu corporation).

In the dielectric ceramics of the present embodiment, the carbon content in the sintered body is preferably 0.1% by mass or less. This avoids that the ceramics contains a lot of carbon in the form of remaining carbon during degreasing and during sintering, and there is no deterioration in dielectric characteristics. More preferably, the carbon content is 0.05% by mass or less.

The carbon content can be measured as follows. That is, firstly, a standard sample is analyzed by using a carbon analyzer ("EMIA-511 TYPE" manufactured by Horiba, Ltd.), and a calibration curve is manufactured. Based on the calibration curve, the carbon content of the sample is measured two times to five times, and the measured values are then averaged.

The dielectric ceramics of the present embodiment preferably has a porosity (the area ratio of pore opening area) of 6% or less. The porosity indicates the ratio of closed pores in the sintered body constituting the dielectric ceramics. The porosity can be adjusted to a desired value by adding a pore forming agent into an unsintered body and then adjusting the amount of addition of the pore forming agent or the like. As the pore forming agent, for example, resin beads composed of polystyrene or the like is used.

A more preferred range of the porosity is 4% or less. This suppresses a remarkable drop of Q value and also decreases the value of dielectric tangent ($\tan\delta$). The porosity can be calculated as follows. That is, photographs or images of the surface and interior of the dielectric ceramics after processing are taken by a metallurgical microscope or a scanning electron microscope (SEM) adjusted to an optional magnification so that, for example, a range of 100 $\mu$m $\times$ 100 $\mu$m can be observed. The photographs or the images are analyzed by an image analyzer. As the image analyzer, for example, a "LUZEX-FS" manufactured by Nireco Corporation may be used.

The dielectric ceramics of the present embodiment preferably has a lattice distortion of 0.5% or less for improvement of Q value, and 0.3% by less for further improvement of Q value.

The mean grain diameter (crystallite diameter) and the lattice distortion of crystals contained in the dielectric ceramics of the present embodiment can be measured by Hall method or the like. Specifically, for example, using an X-ray diffraction apparatus, the crystallite diameter and the lattice distortion are measured by Hall method as follows.

In the apparatus constant correction of the X-ray diffraction apparatus, according to external standard sample method using silicon (SRM640b or a newer standard sample than this standard sample), silicon planes (111), (220), (311), (400), (331), (422), (511), (440) and (531) defined by Miller indices are used. In the measurements of crystallite size and lattice distortion of a sample containing, for example, a rare earth element, Al, Sr and Ti, a cubic

crystal system $SrTiO_3$ planes (100), (110), (111), (200), (210), (211), (220) and (310) defined by Miller indices are used and measured by integral breadth method.

Alternatively, the dielectric ceramics of the present preferred embodiment may contain as a metallic element a totaling 0.01 to 3% by mass of at least one of tungsten, sodium and tantalum in terms of oxide. In the presence of a totaling 0.01 to 3% by mass of at least one of tungsten, sodium and tantalum in terms of oxide, oxygen is supplied to oxygen vacancies existing in the sintered body due to valence change, so that the oxygen vacancies become less and Q value is improved. For further improvement of Q value, it is preferable to contain a totaling 0.02 to 2% by weight of at least one of tungsten, sodium and tantalum in terms of oxide.

Similarly to yttrium and zirconium, the tungsten content, the sodium content and the tantalum content in the sintered body can be measured by quantitative analysis using the ICP (inductively coupled plasma) emission spectrochemical analyzer ("ICPS-8100" manufactured by Shimadzu corporation).

Next, a method of manufacturing the dielectric ceramics of the present embodiment is described. The dielectric ceramics is obtained by wet mixing a powder body in which the coefficients a, b, c and d of the composition formula: $aBaO \cdot bCoO \cdot cZnO \cdot dNb_2O_5$ satisfy the range described above, followed by sintering at 1400°C to 1600°C in atmosphere while holding for more than 5 hours and equal to or less than 15 hours.

Specifically, the method of manufacturing the dielectric ceramics of the present embodiment includes, for example, the following steps (1) to (6).

(1) Firstly, high purity barium oxide (BaO), high purity cobalt oxide (CoO), high purity zinc oxide (Zn) and high purity niobium oxide ($Nb_2O_5$) powders are prepared as starting materials. Their respective powders are then weighed so that after sintering, the coefficients a, b, c and d fall within the above range. Thereafter, a mixture is obtained by adding pure water thereto, followed by wet-mixing and pulverizing by a ball mill using zirconia balls or the like for 1 to 100 hours until the mean grain diameter of the mixed raw material becomes 2.0 μm or less, desirably 0.6 to 1.4 μm.

(2) The mixture is dried and calcined at 1100 to 1300°C for 1 to 10 hours, thereby obtaining a calcined matter.

(3) The obtained calcined matter is lightly crushed. For example, the crushing is carried out by lightly pressing a plate-like member against the calcined matter. When incorporating at least one of yttrium and zirconium into a dielectric ceramics to be obtained, they are mixed in the form of oxide into the calcined matter. Specifically, when adding at least one of yttrium oxide ($Y_2O_3$) and zirconium oxide ($ZrQ_2$), these oxides are weighed at their respective desired ratios and then mixed with the calcined matter. The mean grain diameters of yttrium oxide and zirconium oxide are 2 μm or less, preferably 1 μm or less. Thereafter, pure water is added thereto, and wet-mixing and pulverization are carried out by a ball mill using zirconia balls or the like for 1 to 100 hours until the mean grain diameter becomes 2.0 μm or less, desirably 0.6 to 1.4 μm.

When tungsten oxide ($WO_3$) and sodium oxide ($Na_2O$) and tantalum oxide ($Ta_2O_5$) are mixed, commercially available raw materials are prepared. The mean grain diameters of these materials are previously adjusted to 2 μm or less, and their respective predetermined amounts are weighed and then added at the stage of the wet-mixing after calcination, or the stage before pulverization.

(4) Further, a binder of 1 to 10% by mass, desirably 3 to 10% by mass is added and dehydrated, followed by granulation or sizing with spray drying method or the like. The obtained granulated body or sized powder body are formed into an optional shape. The form of the granulated body or sized powder body may be not only solid such as powder body but also a mixture of a solid and a fluid such as slurry. In this case, solvent may be fluids other than water, for example, isopropyl alcohol, methanol, ethanol, toluene, or acetone. Examples of the forming method include die pressing method, cold isostatic pressing method, and extrusion forming method.

(5) The obtained formed bodyh is sintered at 1400°C to 1600°C in atmosphere while holding for more than 5 hours and equal to or less than 15 hours. A shelf plate for sintering that is made of (high purity) zirconia is used. The formed body is placed on the shelf plate and sintered with the formed body surrounded by a previously prepared prismatic-shaped formed body or the sintered body of the dielectric ceramics containing $Ba(Co_{1/3}Nb_{2/3})O_3$-$Ba(Zn_{1/3}Nb_{2/3})O_3$ based crystals.

More preferably, the sintering is carried out in a state where the formed body is placed on the shelf plate made of zirconia, and the formed body is surrounded by a prismatic-shaped formed body of a dielectric ceramics composed of a specific composition, and the shelf plate made of zirconia is placed thereon.

(6) The dielectric ceramics of the present embodiment is obtained by heat treating the sintered body obtained by sintering at 1200°C to 1400°C in atmosphere for 10 to 100 hours. More preferably, the heat treatment is carried out at 1250°C to 1350°C for 20 to 80 hours.

In the step of the above (3), by adjusting the mean grain diameters of yttrium oxide and zirconium oxide to be added to 2 μm or less, the dispersibility of the yttrium oxide and zirconium oxide in the sintered body becomes suitable, and mechanical characteristics are improved.

In the sintering step of the above (5), owing to the use of the shelf plate for sintering made of zirconia, the sintering is carried out satisfactorily, thereby suppressing deterioration of mechanical characteristics.

In the sintering step of the above (5), the mean grain diameter of the crystals can be adjusted to a desired value by adjusting the sintering conditions. In the sintering step of the above (5), when the sintering is carried out in the state where the formed body is placed on the shelf plate made of zirconia, and the formed body is surrounded by the prismatic-shaped formed body of dielectric ceramics composed of the specific composition, the content ratio of Zn to Ba (Zn atomic percentage/Ba atomic percentage) can be adjusted to a desired value.

In the heat treatment step of the above (6), the peak strength ratio $I_A/I_B$ can be adjusted to a desired value by adjusting the heat treatment conditions. In the heat treatment step of the above (6), the carbon content can be adjusted to a desired value by adjusting the heat treatment conditions.

The dielectric ceramics according to the foregoing embodiment is suitable for various resonator materials, dielectric substrate materials for MIC (monolithic ICs), dielectric waveguide materials or dielectric materials for multilayer ceramic capacitors, which are used in, for example, a high frequency region (800 MHz to 2 GHz).

Next, an example of the dielectric resonator with the dielectric ceramics according to the foregoing embodiment mounted thereon is described with reference to Fig. 1. Fig. 1 is a schematic diagram showing a TE mode dielectric resonator 1 with a dielectric ceramic 5 composed of the dielectric ceramics mounted thereon. As shown in Fig. 1, the dielectric resonator 1 is formed by disposing an input terminal 3 and an output terminal 4 on mutually opposed sides of the inner wall of a metal case 2. The dielectric ceramic 5 composed of the dielectric ceramics is disposed between the input and output terminals 3 and 4 on a support stand 6.

In the TE mode dielectric resonator, when a microwave is inputted from the input terminal 3, the microwave is trapped within the dielectric ceramic 5 by the reflection of the boundary between the dielectric ceramic 5 and a free space, and causes resonance at a specific frequency. Then, this signal is outputted through magnetic field coupling with the output terminal 4.

Although not shown, the dielectric ceramics may be applied to coaxial resonators using TEM mode, stripline resonators, TM mode dielectric ceramic resonators, and other resonators. Alternatively, the dielectric resonator can be constructed by directly disposing the input terminal 3 and the output terminal 4 on the dielectric ceramic 5.

The dielectric ceramic 5 is a resonance medium having a predetermined shape composed of the dielectric ceramics. The shape thereof may be rectangular parallelepiped, cube, plate-like shape, disk, cylinder, polygonal prism, or other resonantable three-dimensional shapes. The frequencies of inputted high frequency signals are approximately 500 MHz to 500 GHz, and approximately 2 GHz to 80 GHz are practically preferred.

The present invention is further described based on practical examples. However, the present invention is not limited to the following examples.

[Example 1]

A dielectric ceramics was manufactured and the dielectric characteristics thereof (Q value, specific inductive capacity ($\varepsilon$r), and temperature coefficient ($\tau$f)) were measured. The following are the details of the method of manufacturing the present example and the methods of measuring these dielectric characteristics.

Firstly, barium oxide, cobalt oxide, zinc oxide and niobium oxide, each having a purity of 99.5% by mass or higher, were prepared as starting materials. These materials were weighed so that after sintering, the coefficients a, b, c and d in $aBaO \cdot bCoO \cdot cZnO \cdot dNb_2O_5$ fell within the ratios shown in Table 1. Thereafter, a mixture was obtained by adding pure water thereto, followed by wet mixing and pulverization by a ball mill using zirconia balls for 10 hours until the mean grain diameter of the mixed raw material became 1 $\mu$m or less.

The mixture was dried and calcined at 1200°C for one to five hours, thereby obtaining a calcined matter. Pure water was added to the obtained calcined matter, followed by wet mixing pulverization by a ball mill using zirconia balls for 1 to 100 hours until the mean grain diameter thereof became 1 $\mu$m or less, thereby obtaining a slurry.

A binder of 1 to 10% by mass was added to the slurry. Thereafter, the slurry was dehydrated, followed by spray granulation using a spray drier, thereby obtaining a secondary raw material. The secondary raw material was formed by die pressing method into a cylindrical body of $\Phi$ 15 mm and 10 mm thickness, thereby obtaining a formed body.

The formed body is placed on a shelf plate made of zirconia and surrounded by a previously prepared prismatic-shaped formed body of dielectric ceramics containing $Ba(Co_{1/3}Nb_{2/3})O_3$-$Ba(Zn_{1/3}Nb_{2/3})O_3$ based crystals, and a shelf plate made of zirconia is further placed thereon. In this state, the formed body is sintered by holding it in atmosphere at 1400°C to 1600°C for 10 hours.

The obtained sintered body was placed on the same shelf plate made of zirconia and heat treated in atmosphere at 1300°C for 20 hours, thereby obtaining Samples Nos. 1 to 20.

Next, the dielectric characteristics of these samples were measured. That is, specific inductive capacity ($\varepsilon$r), quality coefficient Q value, and temperature coefficient ($\tau$f) of resonance frequency were measured by cylindrical resonator method at a measuring frequency of 6 to 7 GHz and at room temperature (20 to 30°C). The Q value was converted to a Q value at 6 to 7 GHz from the relationship expressed by the following equation: (Q value) $\times$ (measuring frequency f) = constant, which is generally established in microwave dielectric bodies. As to the temperature coefficient of resonance frequency, the temperature coefficient ($\tau$f) at 25 to 60°C was calculated on the basis of the resonance frequency at 25°C.

The obtained measurement results are shown in Table 1. One whose specific inductive capacity (εr) was 34 to 36 and Q value was 90000 or higher and temperature coefficient (τf) was -0.5 to 0.5 was determined to be satisfactory.
[Table 1]

| Sample No. | a | b | c | d | Dielectric characteristics, | | |
|---|---|---|---|---|---|---|---|
| | | | | | εr | Q value | τf (ppm/°C) |
| 1 | 0.497 | 0.100 | 0.066 | 0.337 | 35.5 | 75000 | -0.2 |
| 2 | 0.498 | 0.100 | 0.066 | 0.336 | 35.3 | 122000 | -0.1 |
| 3 | 0.499 | 0.100 | 0.066 | 0.335 | 35.2 | 118000 | -0.2 |
| 4 | 0.500 | 0.099 | 0.065 | 0.336 | 34.9 | 35000 | -0.1 |
| 5 | 0.499 | 0.065 | 0.099 | 0.337 | 36.2 | 79000 | 0.7 |
| 6 | 0.499 | 0.066 | 0.098 | 0.337 | 36.0 | 115000 | 0.5 |
| 7 | 0.499 | 0.068 | 0.096 | 0.337 | 35.8 | 123000 | 0.3 |
| 8 | 0.499 | 0.099 | 0.065 | 0.337 | 35.1 | 131000 | -0.1 |
| 9 | 0.499 | 0.13A | 0.034 | 0.337 | 34.8 | 126000 | -0.3 |
| 10 | 0.499 | 0.132 | 0.034 | 0.335 | 34.1 | 121000 | -0.4 |
| 11 | 0.499 | 0.131 | 0.033 | 0.337 | 34.4 | 112000 | -0.4 |
| 12 | 0.499 | 0.129 | 0.035 | 0.337 | 34.5 | 109000 | -0.2 |
| 13 | 0.499 | 0.069 | 0.095 | 0.337 | 35.6 | 102000 | 0.2 |
| 14 | 0.499 | 0.097 | 0.066 | 0.338 | 35.3 | 105000 | 0.1 |
| 15 | 0.499 | 0.133 | 0.033 | 0.335 | 33.8 | 85000 | -0.8 |
| 16 | 0.499 | 0.132 | 0.032 | 0.337 | 33.9 | 78000 | -0.6 |
| 17 | 0.499 | 0.067 | 0.099 | 0.335 | 35.8 | 92000 | 0.4 |
| 18 | 0.499 | 0.066 | 0.100 | 0.335 | 35.9 | 56000 | 0.4 |
| 19 | 0.499 | 0.105 | 0.062 | 0.334 | 35.5 | 71000 | -0.2 |
| 20 | 0.499 | 0.100 | 0.062 | 0.339 | 35.4 | 69000 | -0.2 |

As apparent from Table 1, in Samples Nos. 1 and 4, "a" in the composition formula: $aBao \cdot bCoO \cdot cZnO \cdot dNb_2O_5$ is beyond the range: $0.498 \leq a < 0.500$. Although the specific inductive capacity (εr) and the temperature coefficient (τf) fall within a suitable range, the Q value is an extremely low value of less than 90000.
In Sample Nos. 5 and 15, "b" in the composition formula: $aBaO \cdot bCoO \cdot cZnO \cdot dNb_2O_5$ is beyond the range: $0.066 \leq b \leq 0.132$, failing to obtain those falling within a satisfactory range in regard to specific inductive capacity (εr), Q value, and temperature coefficient (τf).
In Sample Nos. 16 and 18, "c" in the composition formula: $aBaO \cdot bCoO \cdot cZnO \cdot dNb_2O_5$ is beyond the range: $0.033 \leq c \leq 0.099$, and the Q value is as low as less than 90000. Further in Sample No. 16, no satisfactory results are obtained in regard to specific inductive capacity (εr) and temperature coefficient (τf).
In Samples Nos. 19 and 20, "d" in the composition formula: $aBaC \cdot bCoO \cdot cZnO \cdot dNb_2O_5$ is beyond the range: $0.335 \leq d \leq 0.338$. Although the specific inductive capacity (εr) and the temperature coefficient (τf) fall within a suitable range, the Q value is as low as less than 90000, failing to obtain satisfactory results.
In contrast to these samples, Samples Nos. 2, 3, 6 to 14, and 17 have satisfactory results in regard to specific inductive capacity (εr), Q value and temperature coefficient (τf).

[Example 2]

Next, there was conducted a test to confirm the influence exerted on the dielectric characteristics of the dielectric ceramics of the present invention by the peak strength ratio $I_A/I_B$ between the crystal peak $I_A$ existing in the vicinity of

# EP 2 216 307 A1

2θ=18° and the crystal peak $I_B$ existing in the vicinity of 2θ=31° in the X-ray diffraction chart.

In the test, Sample Nos. 21 to 32 were used which were manufactured in the same manufacturing method as Example 1, except that the coefficients a, b, c and d of their respective ingredients were adjusted to the following values, and heat treatment conditions were those shown in Table 2.

a: 0.499
b: 0.069
c: 0.095
d: 0.337

The peak strength ratios $I_A/I_B$ of Samples Nos. 21 to 32 were measured according to the above method. The results are shown in Table 2. Further in Samples Nos. 21 to 32, mechanical characteristics (three-point flexural strength) and the quality coefficient Q value at a measuring frequency of 6 to 7 GHz were measured. The three-point flexural strength measurement was carried out according to JIS R1601-1995. The Q value measurement was carried out using the same method as Example 1. The results are shown in Table 2.

[Table 2]

| Sample No. | Heat treatment temperature (°C) | Holding time (hour) | Peak strength ratio in X-ray diffraction $I_A/I_B$ | Three-point flexural strength (MPa) | Dielectric characteristics Q value |
|---|---|---|---|---|---|
| 21 | 1150 | 50 | 0.001 | 83 | 90000 |
| 22 | 1200 | 50 | 0.003 | 90 | 95000 |
| 23 | 1250 | 50 | 0.005 | 92 | 118000 |
| 24 | 1300 | 50 | 0.007 | 98 | 130000 |
| 25 | 1350 | 50 | 0.008 | 96 | 126000 |
| 26 | 1400 | 50 | 0.01 | 93 | 123000 |
| 27 | 1450 | 50 | 0.01 | 75 | 121000 |
| 28 | 1300 | 9 | 0.002 | 103 | 91000 |
| 29 | 1300 | 10 | 0.003 | 101 | 98000 |
| 30 | 1300 | 30 | 0.005 | 98 | 105000 |
| 31 | 1300 | 100 | 0.01 | 95 | 127000 |
| 32 | 1300 | 105 | 0.01 | 72 | 122000 |

As apparent from Table 2, in Sample No. 2 whose peak strength ratio $I_A/I_B$ is less than 0.003, it seems that the heat treatment temperature was low and the crystals were less likely to be regulated, thus showing low dielectric characteristics than others.

In Sample No. 28 whose peak strength ratio $I_A/I_B$ is less than 0.003, it seems that the holding time of heat treatment was short and the crystals were not regulated, thus showing a slightly lower quality coefficient Q value than others. In Samples Nos. 27 and 32, though the peak strength ratio $I_A/I_B$ falls within the range, the crystals causes significant grain growth due to a high heat treatment temperature, thus deteriorating strength.

In contrast to these samples, Samples Nos. 22 to 26, and 29 to 31 whose peak strength ratio $I_A/I_B$ is 0.003 or more indicate satisfactory values both in three-point flexural strength and dielectric characteristics (Q value). Particularly, they indicate more satisfactory values in regard to the dielectric characteristics when the heat treatment temperature is between 1250 and 1350°C.

[Example 3]

Next, there was conducted a test to confirm the influence exerted by the mean grain diameter of the crystals on the dielectric characteristics of the dielectric ceramics of the present invention.

In the test, Sample Nos. 33 to 47 were used which were manufactured in the same manufacturing method as

9

Example 1, except that the coefficients a, b, c and d of their respective ingredients were adjusted to the following values, and the sintering temperature and holding time during sintering which influence the mean grain diameter of the crystals were those shown in Table 3.

a: 0.499
b: 0.068
c: 0.096
d: 0.337

The mean grain diameters of the crystals in Samples Nos. 33 to 47 were measured according to the Hall method. The results are shown in Table 3. The mechanical characteristics (three-point flexural strength) of Samples Nos. 33 to 47, and the Q value at a measuring frequency of 6 to 7 GHz were measured. The three-point flexural strength measurement was carried out according to JIS R1601-1995. The Q value measurement was carried out using the same method as Example 1. The results are shown in Table 3.

[Table 3]

| Sample No. | Sintering temperature (°C) | Holding time (hour) | Mean grain diameter ($\mu$m) | Three-point flexural strength | Dielectric characteristics Q value |
|---|---|---|---|---|---|
| 33 | 1400 | 5 | 5 | 96 | 91000 |
| 34 | 1400 | 6 | 10 | 93 | 101000 |
| 35 | 1400 | 10 | 18 | 90 | 112000 |
| 36 | 1400 | 15 | 25 | 88 | 125000 |
| 37 | 1400 | 20 | 31 | 75 | 127000 |
| 38 | 1500 | 5 | 7 | 95 | 92000 |
| 39 | 1500 | 6 | 12 | 92 | 104000 |
| 40 | 1500 | 10 | 20 | 89 | 118000 |
| 41 | 1500 | 15 | 28 | 85 | 127000 |
| 42 | 1500 | 20 | 33 | 71 | 129000 |
| 43 | 1600 | 5 | 9 | 93 | 94000 |
| 44 | 1600 | 6 | 15 | 91 | 107000 |
| 45 | 1600 | 10 | 22 | 89 | 120000 |
| 46 | 1600 | 15 | 30 | 83 | 128000 |
| 47 | 1600 | 20 | 35 | 68 | 130000 |

As apparent from Table 3, in Samples Nos. 33, 38 and 43, the holding time of sintering is as short as five hours, and hence the crystals are not subject to grain growth, and their respective mean grain diameters of the crystals are less than 10 $\mu$m, thus showing the Q values lower than others.

In Samples Nos. 37, 42 and 47, the holding time of sintering is long, and hence the crystals are subject to sufficient grain growth, thus achieving high Q values. However, due to excessive grain growth, their respective mean grain diameters exceed 30 $\mu$m, thus showing lower three-point flexural strength values than others.

In contrast to these samples, Samples Nos. 34 to 36, 39 to 41, and 44-46, in which the mean grain diameter of the crystals are 10 $\mu$m or more and 30 $\mu$m or less, the sintering temperature and holding time settings are optimum, and the crystals are subject to adequate grain growth, thus achieving satisfactory three-point flexural strengths and high Q values.

[Example 4]

As to Sample No. 8 having the maximum Q value used in Example 1, its formed body was manufactured using the same manufacturing method as Example 1, and a dielectric ceramics was manufactured under different sintering conditions. Similarly to Example 1, specific inductive capacity ($\varepsilon r$), Q value, and temperature coefficient ($\tau f$) were measured.

Firstly, tests were conducted under the following three kinds of sintering conditions.

(1) The same conditions as Example 1
(2) The use of alumina for shelf plates
(3) The sintering without surrounding the formed body by the prismatic-shaped formed body or sintered body of the dielectric ceramics containing $Ba(Co_{1/3}Nb_{2/3})O_3$-$Ba(Zn_{1/3}Nb_{2/3})O_3$ based crystals

As a result, one sintered under the condition (1) showed satisfactory dielectric characteristics. In contrast, in those sintered under the conditions (2) or (3), their respective dielectric characteristics were deteriorated, making it difficult to manufacture the dielectric ceramics showing satisfactory values.

Next, each of the samples manufactured under the sintering conditions (1), (2), or (3) was divided into two in the axial direction of a cylindrical body. In the cross section thereof, the count numbers of elements of Zn and Ba in the surface vicinity and the interior were measured by fluorescent X-ray analysis, and the content ratio of Zn to Ba (Zn atomic percentage/Ba atomic percentage) was calculated.

As a result, in the samples manufactured under the sintering conditions (2) or (3), their content ratios in the surface vicinity were 1.3 and 1.1, respectively, and those in the interior were 1.62 and 1.65, respectively. That is, the Zn element in the surface vicinity became lessened and it seems that this influenced the deterioration of the dielectric characteristics. In contrast, the sample manufactured under the sintering condition (1) indicated 1.62 in the surface vicinity and 1.68 in the interior.

[Example 5]

Next, Samples Nos. 48 to 66 were manufactured by adding a predetermined amount of yttrium oxide and a predetermined amount of zirconium oxide shown in Table 4 into one having the same composition as Sample No. 8 in Example 1. In Table 4, $Y_2O_3$ amount and $ZrO_2$ amount are the values converted to $Y_2O_3$ and $ZrO_2$, respectively.

Tests for measuring mechanical characteristics (three-point flexural strength) and the quality coefficient Q value at a measuring frequency of 6 to 7 GHz were conducted on the obtained samples. The three-point flexural strength measurement was carried out according to JIS R1601-1995. The Q value measurement was carried out by using the same method as Example 1. The results are shown in Table 4.

[Table 4]

| Sample No. | a | b | c | d | $Y_2O_3$ amount (% by mass) | $ZrO_2$ amount (% by mass) | Three-point flexural strength (MPa) | Dielectric characteristics Q value |
|---|---|---|---|---|---|---|---|---|
| 48 | 0.499 | 0.099 | 0.065 | 0.337 | - | - | 85 | 131000 |
| 49 | 0.499 | 0.099 | 0.065 | 0.337 | 0.05 | - | 95 | 128000 |
| 50 | 0.499 | 0.099 | 0.065 | 0.337 | 0.10 | - | 101 | 115000 |
| 51 | 0.499 | 0.099 | 0.065 | 0.337 | 0.15 | - | 108 | 104000 |
| 52 | 0.499 | 0.099 | 0.065 | 0.337 | 0.30 | - | 115 | 95000 |
| 53 | 0.499 | 0.099 | 0.065 | 0.337 | 0.31 | - | 113 | 90000 |
| 54 | 0.499 | 0.099 | 0.065 | 0.337 | - | 0.05 | 101 | 129000 |
| 55 | 0.499 | 0.099 | 0.065 | 0.337 | - | 0.10 | 109 | 113000 |
| 56 | 0.499 | 0.099 | 0.065 | 0.337 | - | 0.15 | 118 | 102000 |
| 57 | 0.499 | 0.099 | 0.065 | 0.337 | - | 0.30 | 121 | 98000 |
| 58 | 0.499 | 0.099 | 0.065 | 0.337 | - | 0.31 | 115 | 91000 |
| 59 | 0.499 | 0.099 | 0.065 | 0.337 | 0.02 | 0.02 | 93 | 126000 |

(continued)

| Sample No. | a | b | c | d | Y$_2$O$_3$ amount (% by mass) | ZrO$_2$ amount (% by mass) | Three-point flexural strength (MPa) | Dielectric characteristics Q value |
|---|---|---|---|---|---|---|---|---|
| 60 | 0.499 | 0.099 | 0.065 | 0.337 | 0.10 | 0.02 | 98 | 118000 |
| 61 | 0.499 | 0.099 | 0.065 | 0.337 | 0.05 | 0.10 | 110 | 112000 |
| 62 | 0.499 | 0.099 | 0.065 | 0.337 | 0.10 | 0.05 | 106 | 109000 |
| 63 | 0.499 | 0.099 | 0.065 | 0.337 | 0.20 | 0.10 | 118 | 101000 |
| 64 | 0.499 | 0.099 | 0.065 | 0.337 | 0.10 | 0.20 | 114 | 97000 |
| 65 | 0.499 | 0.099 | 0.065 | 0.337 | 0.10 | 0.21 | 108 | 92000 |
| 66 | 0.499 | 0.099 | 0.065 | 0.337 | 0.21 | 0.10 | 105 | 91000 |

As apparent from Table 4, the improvement of the three-point flexural strength was observed by adding yttrium oxide and zirconium oxide. It was found that Samples Nos. 53, 58, 65 and 66 in which the total amount of addition of yttrium oxide and zirconium oxide was more than 0.30% by mass lowered the three-point flexural strength than Samples Nos. 52, 57, 63 and 64 in which the total amount of addition thereof was 0.30% by mass.

Although the samples in which the total amount of addition was more than 0.30% by mass ensured the Q value of 90000 or more, the results were lower than other samples. In contrast to these samples, it was confirmed that Samples Nos. 48 to 52, 54 to 57 and 59 to 64 caused no rapid Q value drop. Consequently, it was found that the upper limit value of the total amount of addition of yttrium oxide and zirconium oxide was 0.30% by mass.

[Example 6]

A sample was manufactured as follows. That is, its sintered body was manufactured in the same composition ratio in Example 1 by using the same manufacturing method as Example 1, and thereafter no heat treatment was carried out. The carbon content of this sample and that of Sample No. 8 were measured.

The carbon content was measured as follows. Firstly, a standard sample was analyzed by the carbon analyzer ("EMIA-511 TYPE" manufactured by Horiba, Ltd.), and a calibration curve was manufactured. Based on the calibration curve, the carbon content measurement of each sample was carried out two times to five times, and the average value thereof was obtained.

As a result, in the sample not subjected to heat treatment, the carbon content was as high as 0.12% by mass. The Q value thereof was obtained by the same measuring method as Example 1, and it was 95000 that was lower than that of Sample No. 8. In contrast, it was confirmed in Sample No. 8 that the carbon content was as low as 0.05% by mass, and the Q value showed a satisfactory value.

**Claims**

1.  A dielectric ceramics comprising crystals of a composition formula:

$$aBaO \cdot bCoO \cdot cZnO \cdot dNb_2O_5$$

wherein coefficients a, b, c and d satisfy the following equations.

$$0.498 \leqq a < 0.500;$$

$$0.066 \leqq b \leqq 0.132;$$

$$0.033 \leqq c \leqq 0.099;$$

and

$$0.335 \leq d \leq 0.338$$

2. The dielectric ceramics according to claim 1 wherein a peak strength ratio $I_A/I_B$ between a crystal peak $I_A$ existing in the vicinity of $2\theta=18°$ and a crystal peak $I_B$ existing in the vicinity of $2\theta=31°$ in an X-ray diffraction chart of the crystals is 0.003 or more.

3. The dielectric ceramics according to claim 1 wherein the mean grain diameter of the crystals is 10 $\mu$m or more and 30 $\mu$m or less.

4. The dielectric ceramics according to claim 1 wherein the content ratio of Zn to Ba (Zn atomic percentage/Ba atomic percentage) is 1.6 or more and 1.7 or less.

5. The dielectric ceramics according to claim 1, containing at least one of yttrium and zirconium, wherein their total contents is 0.30% by mass or less in terms of oxide.

6. The dielectric ceramics according to claim 1, wherein carbon content is 0.1% by mass or less.

7. The dielectric ceramics according to claim 1, wherein porosity is 6% or less.

8. A dielectric ceramics having crystals composed of BaO, CoO, ZnO, and $Nb_2O_5$, wherein a peak strength ratio $I_A/I_B$ between a crystal peak $I_A$ existing in the vicinity of $2\theta=18°$ and a crystal peak $I_B$ existing in the vicinity of $2\theta=31°$ in an X-ray diffraction chart is 0.003 or more.

9. The dielectric ceramics according to claim 8 wherein the mean grain diameter of the crystals is 10 $\mu$m or more and 30 $\mu$m or less.

10. The dielectric ceramics according to claim 8 wherein the content ratio of Zn to Ba (Zn atomic percentage/Ba atomic percentage) is 1.6 or more and 1.7 or less.

11. The dielectric ceramics according to claim 8, containing at least one of yttrium and zirconium, wherein their total contents is 0.30% by mass or less in terms of oxide.

12. The dielectric ceramics according to claim 8, whose carbon content is 0.1% by mass or less.

13. A method of manufacturing a dielectric ceramics comprising wet mixing a powder body of a composition formula:

$$aBaO \cdot bCoO \cdot cZnO \cdot dNb_2O_5$$

wherein coefficients a, b, c and d satisfy the following equations; and then sintering by keeping this in atmosphere at 1400°C to 1600°C for more than 5 hours and equal to or less than 15 hours.

$$0.498 \leq a < 0.500;$$

$$0.066 \leq b \leq 0.132;$$

$$0.033 \leq c \leq 0.099;$$

and

$$0.335 \leq d \leq 0.338$$

**14.** A resonator using the dielectric ceramics according to claim 1 as a dielectric body.

**15.** A resonator using the dielectric ceramics according to claim 8 as a dielectric body.

Fig. 1

## INTERNATIONAL SEARCH REPORT

| | International application No. |
|---|---|
| | PCT/JP2008/071568 |

| A. CLASSIFICATION OF SUBJECT MATTER |
|---|
| $C04B35/00$(2006.01)i, $H01B3/12$(2006.01)i, $H01G4/12$(2006.01)i |

According to International Patent Classification (IPC) or to both national classification and IPC

| B. FIELDS SEARCHED |
|---|

Minimum documentation searched (classification system followed by classification symbols)
C04B35/00, H01B3/12, H01G4/12

Documentation searched other than minimum documentation to the extent that such documents are included in the fields searched
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)
REGISTRY(STN), CAplus(STN)

| C. DOCUMENTS CONSIDERED TO BE RELEVANT |
|---|

| Category* | Citation of document, with indication, where appropriate, of the relevant passages | Relevant to claim No. |
|---|---|---|
| A | Bian, J.J. et al, Structure and microwave dielectric properties of Ba1+x(Co0.7Zn0.3)1/3Nb2/3O3(-0.015<=x<=0.015), Journal of the European Ceramic Society, 2006.12.13, Vol.27, pp.2817-2821 | 1-15 |
| A | CN 101062863 A (Shanghai University), 31 October, 2007 (31.10.07), Full text (Family: none) | 1-15 |
| A | JP 62-252008 A (FDK Corp.), 02 November, 1987 (02.11.87), Full text (Family: none) | 1-15 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 24 February, 2009 (24.02.09) | 10 March, 2009 (10.03.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**EP 2 216 307 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 8045347 A